# FASCICULE DE BREVET EUROPEEN

(11) **EP 1 623 913 B1**
(45) Date de publication et mention de la délivrance du brevet: **01.07.2009**
(21) Numéro de dépôt: 05291445.4
(22) Date de dépôt: 05.07.2005
(51) Int. Cl.: B62D 53/06, B62D 63/06

(54) **Remorque pour le transport d'engins**
Anhänger zum Transport von Geräten
Trailer to transport devices

(30) Priorité: 06.08.2004 FR 0408690
(43) Date de publication de la demande: 08.02.2006
(73) Titulaire: COCHET S.A., F-72130 Souge le Ganelon (FR)
(72) Inventeur: Cochet, Jean-Louis, 72130 Souge le Ganelon (FR)
(74) Mandataire: Eidelsberg, Olivier Nathan

(56) Documents cités:
- EP-A- 1 445 179
- DE-U1- 20 009 156
- US-A- 2 867 444
- US-A- 6 102 370

## Description

La présente invention vise une remorque destinée au transport d'engins de travaux publics, d'engins agricoles ou autres.

L'invention se rapporte à des remorques destinées à être attelées à l'arrière d'un engin tracteur et comportant un châssis pourvu d'un plateau et supporté par des roues, ledit châssis comportant des moyens pour prendre appui sur le sol, le soulever, des moyens pour faire basculer les roues sous le châssis et des moyens pour abaisser le châssis jusqu'au sol de manière que des engins lourds puissent facilement monter sur le plateau.

La demande européenne n° 1 445 179 déposée le 15 Janvier 2004, au nom de la demanderesse, décrit une telle remorque avec, à l'avant et à l'arrière, un patin destiné à reposer sur le sol et relié u châssis par des vérins. Une telle disposition fonctionne parfaitement mais est assez complexe.

Une remorque conforme au préambule de la revendication 1 est connue du document US-A-2867444.

L'un des buts de l'invention est de réaliser une remorque du type ci-dessus qui, tout en présentant une parfaite sécurité, soit plus simple.

La remorque, selon l'invention est du type comprenant un châssis supporté par des roues et destiné à être attelé à l'arrière d'un engin tracteur, ledit châssis étant pourvu, insérés entre deux patins dont l'un est situé au voisinage d'une extrémité du châssis et l'autre au voisinage de l'autre extrémité dudit châssis et ce dernier, de moyens de levage permettant de soulever ledit châssis afin que les roues puissent être repliées sous celui-ci et ledit châssis abaissé jusqu'au sol pour permettre le chargement de l'engin à transporter, puis soulever à nouveau pour ramener les roues dans une position de transport, lesdits patins étant écartés du sol afin que les roues reposent sur le sol, et est caractérisée en ce que lesdits moyens de levage comprennent, entre le châssis et chaque patin, deux bras dont les extrémités inférieures sont guidées dans ledit patin, les deux bras étant articulés l'un sur l'autre en un point intermédiaire médian de leur longueur sur un axe, les extrémités supérieures desdits bras étant guidées sur une traverse du châssis et au moins un vérin hydraulique étant inséré entre les deux bras de chaque moyen de levage.

Afin que les bras restent situés dans une position parfaitement équilibrée par rapport au châssis, l'un des bras est relié par une biellette à un point de la traverse situé dans l'axe longitudinal du châssis.

Les moyens de levage comportent des organes pour le maintien horizontal du châssis lors de son soulèvement après chargement de l'engin à transporter.

Suivant un premier mode de réalisation, les deux moyens de levage sont reliés par une tige comportant, si la tige est inclinée, des moyens pour commander l'envoi d'huile sous pression dans le vérin correspondant aux moyens de levage les moins élevés.

Suivant une caractéristique constructive, la tige comporte un élément tubulaire dans lequel coulisse un doigt portant des butées reliées au châssis par des organes élastiques et destinées à coopérer, en cas d'inclinaison de ce dernier, avec un commutateur relié électriquement à un électrodistributeur pour envoyer de l'huile sous pression au vérin des moyens de levage les moins élevés.

Suivant une variante de réalisation, l'un des bras de l'un des moyens de levage et le bras correspondant de l'autre moyen de levage sont reliés rigidement par un arbre de torsion afin que, si l'un des moyens de levage soulève le châssis à une hauteur supérieure à l'autre, la résistance à la torsion bloque les moyens de levage les plus élevés, tandis que l'huile afflue naturellement dans le vérin correspondant aux moyens de levage les plus bas.

L'invention va maintenant être décrite avec plus de détails en se référant à des modes de réalisation particuliers donnés à titre d'exemple seulement et représentés aux dessins annexés.
Figure 1 est une vue en perspective schématique montrant une remorque, selon l'invention, en position de route.
Figure 2 montre la remorque en position surélevée.

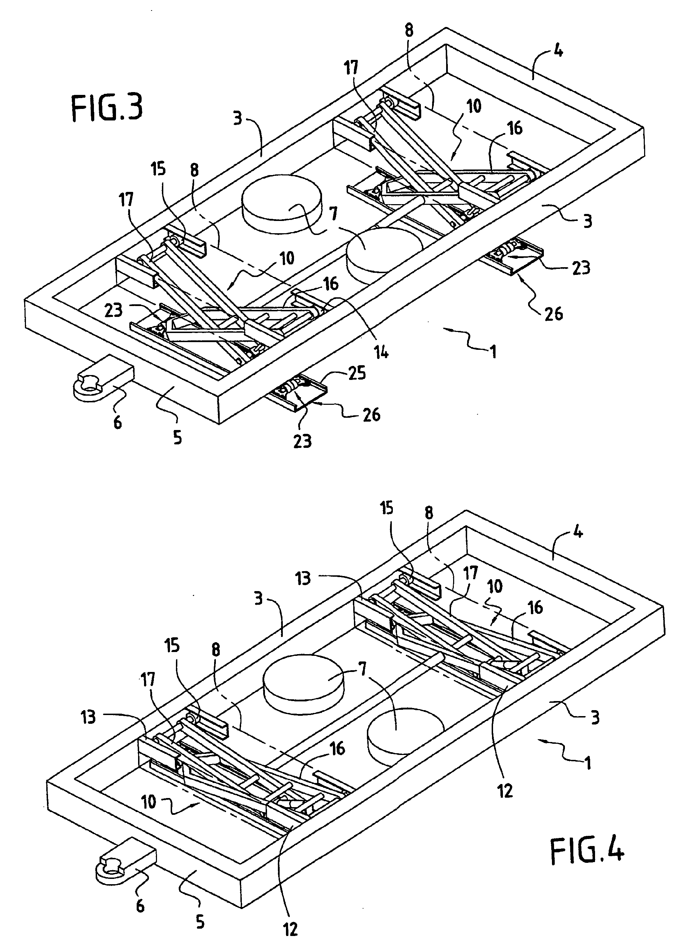

Figure 3 montre la remorque, les roues étant pivotés sous le châssis.
Figure 4 montre la remorque en position de chargement.

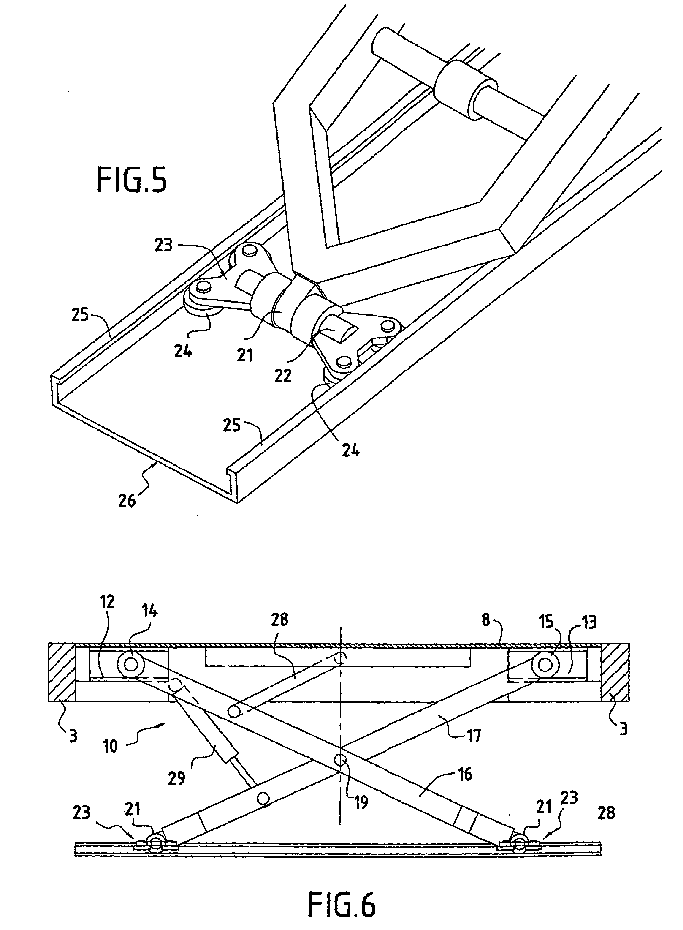

Figure 5 montre à plus grande échelle en perspective un détail.
Figure 6 est une vue en coupe suivant la ligne 6-6 de la figure 2.
Figure 7 montre schématiquement un dispositif permettant de maintenir le châssis horizontal lors du soulèvement de celui-ci.
Figure 8 est une vue en perspective d'une variante du dispositif.

La remorque représentée aux différentes figures comprend un châssis 1 avec deux côtés longitudinaux 3 reliés aux extrémités par des traverses 4 et 5. La traverse 5 est pourvue d'un timon d'attelage 6 à un engin tracteur.

La remorque est supportée par des roues 7. Ici, on a représenté deux roues, mais bien entendu, en fonction de la longueur de la remorque, on peut prévoir plusieurs trains de roues.

Le châssis comporte deux traverses intermédiaires 8 supportant des moyens désignés dans leur ensemble par la référence 10 et destinés à permettre le levage du châssis 1 de manière qu'il puisse être soulevé pour permettre de rabattre les roues 7 sous le châssis 1 puis ensuite abaissé afin qu'il repose sur le sol de manière que l'engin à transporter puisse facilement monter sur le plateau du châssis.

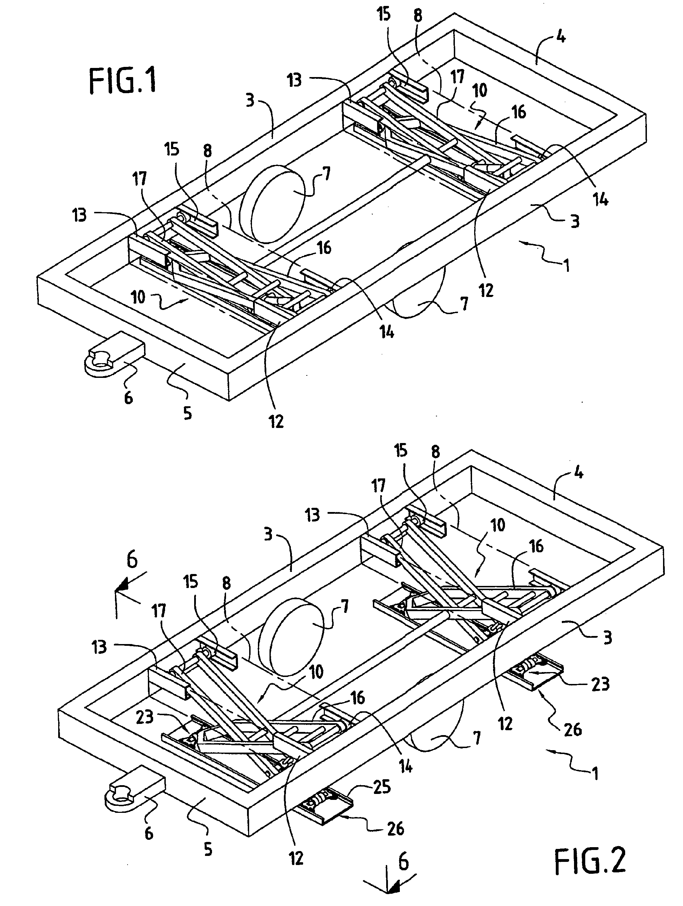

Le châssis est ensuite soulevé de manière que les roues soient ramenées dans la position de transport (voir figure 1) et les moyens de levage 10 sont alors rétractés.

Chaque traverse intermédiaire 8 affecte une section en U renversé avec, au voisinage des extrémités des guides 12 et 13 dans lesquels roulent respectivement des galets 14 et 15.

Les galets 14 sont portés par une extrémité d'un bras 16, tandis que les galets 15 sont portés par une extrémité d'un second bras 17.

Les bras sont articulés l'un sur l'autre en un point intermédiaire médian de leur longueur sur un axe 19.

Le bras 16 est terminé par un palier 21 sur lequel s'articule un axe portant un chariot 23 supportant deux trains de galets 24 qui roulent dans des guides 25 d'un patin 26 destiné à reposer sur le sol.

Le second bras 17 est pourvu, à son extrémité libre, d'un palier 21 supportant un chariot 23 dont les galets 24 roulent dans des guides 25 du patin 26.

Le bras 16 est relié à la traverse 8 par une bielle 28 de manière que l'axe 19 soit toujours maintenu dans un plan vertical passant par l'axe longitudinal du châssis 1.

Entre les bras 16 et 17 est inséré un vérin hydraulique 29 destiné à commander l'abaissement du patin 26 afin qu'il repose sur le sol et permette de soulever le châssis ou, au contraire, qu'il soit écarté du sol.

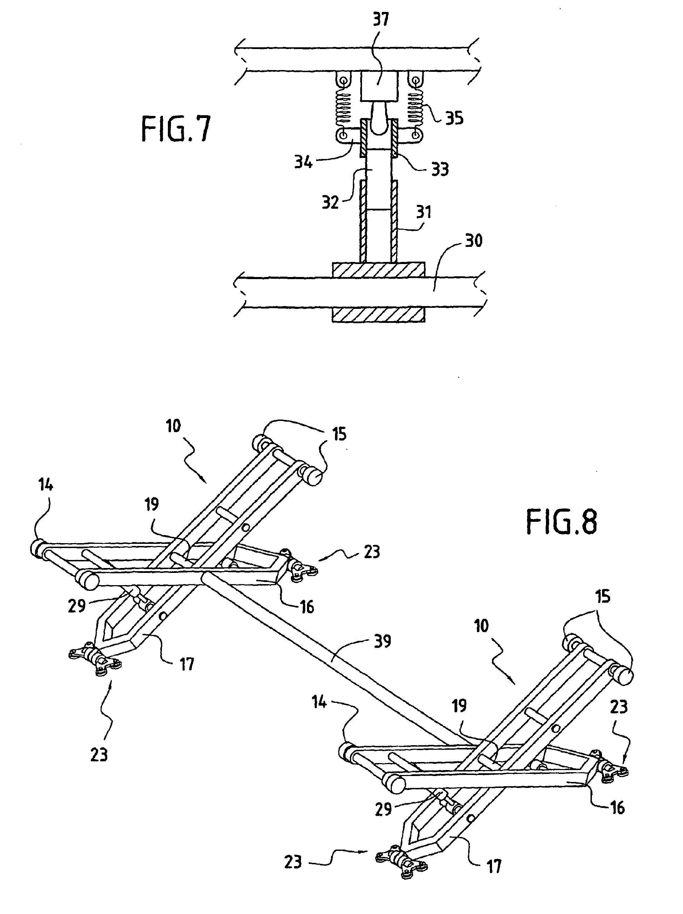

Dans le mode de réalisation décrit, il est prévu un moyen de levage 10 au voisinage de la partie avant du châssis et un moyen de levage 10 au voisinage de la partie arrière de celui-ci. Il est impératif, compte tenu du poids des engins à transporter, que le châssis puisse être soulevé en maintenant une position horizontale sans que l'avant ou l'arrière soit incliné. A cet effet (voir figure 7), les axes 19 des deux moyens de levage 10 sont reliés par une tige 30 en un point intermédiaire médian de laquelle est monté un élément tubulaire 31 dans lequel coulisse un doigt 32 portant deux butées 33 et 34 reliées au châssis par des organes élastiques 35, tels que des ressorts.

Le châssis 1 supporte un commutateur 37 relié électriquement à un électrodistributeur d'huile et qui permet de commander sélectivement l'envoi d'huile dans l'un ou l'autre des vérins 29.

Ainsi, si le châssis penche vers l'avant, par exemple, la tige 30 sera inclinée vers l'avant et la butée 32, par exemple, portera contre le commutateur qui commandera l'envoi d'huile sous pression dans le vérin 29 des moyens de levage 10 situés à l'avant du châssis 1.

Si, au contraire, le châssis 1 penche vers l'arrière, la tige 30 sera inclinée dans le sens opposé à celui indiqué précédemment et la butée 33 viendra porter contre le commutateur 37 pour commander l'envoi d'huile sous pression dans le vérin 29 des moyens de levage 10 situés au voisinage de la traverse 4.

On pourrait également prévoir sur la tige 30 un simple commutateur à nervure destiné à commander un électrodistributeur d'huile.

A la figure 8, on a représenté une variante de réalisation du système permettant que les deux moyens de levage 10 assurent un soulèvement du châssis 1 en gardant sa position horizontale.

Dans ce mode de réalisation, les deux bras 16 sont reliés rigidement par un arbre de torsion 39.

Si un des moyens de levage 10 soulève plus rapidement le châssis que l'autre, il va engendrer une torsion sur l'arbre 39. La résistance à la torsion va bloquer ledit moyen de levage 10, tandis que le vérin de l'autre moyen de levage va naturellement être alimenté afin que les deux moyens de levage 10 occupent la même position.

Bien entendu, l'invention n'est pas limitée aux modes de réalisation qui viennent d'être décrits et représentés. On pourra y apporter de nombreuses modifications de détail sans sortir pour cela du cadre de l'invention telle que revendiquée.

## Revendications

1. Remorque pour le transport d'engins du type comprenant un châssis (1) supporté par des roues (7) et destiné à être attelé à l'arrière d'un engin tracteur, ledit châssis étant pourvu, insérés entre deux patins dont l'un est situé au voisinage d'une extrémité du châssis et l'autre au voisinage de l'autre extrémité dudit châssis et ce dernier, de moyens de levage (10) permettant de soulever le châssis afin que les roues puissent être repliées sous celui-ci et ledit châssis abaissé jusqu'au sol pour permettre le chargement de l'engin à transporter, puis soulevé à nouveau pour ramener les roues (7) dans une position de transport, lesdits patins étant écartés du sol afin que les roues reposent sur le sol, ladite remorque étant **caractérisée en ce que** lesdits moyens de levage comprennent, entre le châssis (1) et chaque patin (26), deux bras (16 et 17) dont les extrémités inférieures sont guidées dans ledit patin (26), les deux bras étant articulés l'un sur l'autre en un point intermédiaire médian de leur longueur sur un axe (19), les extrémités supérieures desdits bras étant guidées sur une traverse (8) du châssis et au moins un vérin hydraulique (29) étant inséré entre les deux bras (16, 17) de chaque moyen de levage (10) .

2. Remorque, selon la revendication 1, **caractérisée en ce que** l'un des bras (16) est relié par une biellette (28) à un point de la traverse (8) situé dans l'axe longitudinal du châssis.

3. Remorque, selon la revendication 1, **caractérisée en ce que** les moyens de levage (10) comportent des organes (31, 37) pour le maintien horizontal du châssis lors de son soulèvement après chargement de l'engin à transporter.

4. Remorque, selon la revendication 3, **caractérisée en ce que** les deux moyens de levage (10) sont reliés par une tige (30) comportant, si la tige est inclinée, des moyens (31, 33, 37) pour commander l'envoi d'huile sous pression dans le vérin correspondant aux moyens de levage (10) les moins élevés.

5. Remorque, selon les revendications 3 et 4, **caractérisée en ce que** la tige (30) comporte un élément tubulaire (31) dans lequel coulisse un doigt (32) portant des butées (33, 34) reliées au châssis par des organes élastiques (35) et destinées à coopérer en cas d'inclinaison de ce dernier avec un commutateur (37) relié électriquement à un électrodistributeur pour envoyer de l'huile sous pression au vérin (29) des moyens de levage (10) les moins élevés.

6. Remorque, selon la revendication 3, **caractérisée en ce que** l'un des bras (17) de l'un des moyens de levage (10) et le bras correspondant (17) de l'autre moyens de levage (10) sont reliés rigidement par un arbre de torsion (39) afin que, si l'un des moyens de levage (10) soulève le châssis à une hauteur supérieure à l'autre, la résistance à la torsion bloque les moyens de levage (10) les plus élevés, tandis que l'huile afflue naturellement dans le vérin correspondant aux moyens de levage (10) les plus bas.

## Claims

1. Trailer for transporting engines of the type comprising a chassis (1) supported by wheels (7) and intended to be attached to the rear of a tractor engine, the said chassis being provided, inserted between two blocks, one of which is situated adjacent to one end of the chassis and the other adjacent to the other end of said chassis and the latter, whereby lifting means (10) make it possible to raise the chassis so that the wheels can be folded underneath the latter and said chassis lowered to the ground to allow the loading of the engine to the transported, then raise it again to move the wheels (7) into a transport position, said blocks being removed from the ground so that the wheels rest on the ground, said trailer being **characterised in that** the said lifting means comprise, between the chassis (1) and each block (26), two arms (16 and 17) the bottom ends of which are guided into said block (26), the two arms being articulated to one another at a median intermediate point of their length in an axis (19), the upper ends of said arms being guided on a crossbar (8) of the chassis and at least one hydraulic jack (29) being inserted between the two arms (16, 17) of each lifting means (10).

2. Trailer according to claim 1, **characterised in that** one of the arms (16) is connected by a link (28) to a point of the crossbar (8) located in the longitudinal axis of the chassis.

3. Trailer according to claim 1, **characterised in that** the lifting means (10) comprise members (31, 37) for horizontally supporting the chassis during its lifting after the loading of the engine to be transported.

4. Trailer according to claim 3, **characterised in that** the two lifting means (10) are connected by a rod (30) comprising, if the rod is inclined, means (31, 33, 37) for controlling the transmission of oil under pressure into the jack corresponding to the lifting means (10) that are less elevated.

5. Trailer according to claims 3 and 4, **characterised in that** the rod (30) comprises a tubular element (31) into which a finger (32) bearing stops (33, 34) slides, which stops are connected to the chassis by elastic elements (35) and are intended to cooperate in case of inclination of the latter with a switch (37) connected electrically to an electrodistributor for transmitting the oil under pressure to the jack (29) of the lifting means (10) that are less elevated.

6. Trailer according to claim 3, **characterised in that** one of the arms (17) of one of the lifting means (10) and the corresponding arm (17) of the other lifting means (10) are connected rigidly by a torsion shaft (39) so that if one of the lifting means (10) lifts the chassis to a greater height than the other, the resistance to torsion blocks the more elevated lifting means (10), whilst the oil runs naturally into the jack corresponding to the lowest lifting means (10).

## Patentansprüche

1. Anhänger für den Transport von Maschinen, von der Art, die ein auf Rädern (7) gelagertes Fahrgestell (1) umfasst, und dazu bestimmt, hinten an ein Zugfahrzeug angehängt zu werden, wobei das Fahrgestell, eingefügt zwischen zwei Fußplatten, von denen eine sich in der Nähe eines Endes des Fahrgestells und die andere sich in der Nähe des anderen Endes des Fahrgestells befindet, und diesem Letzteren, mit Hebemitteln (10) versehen ist, die es ermöglichen, das Fahrgestell hochzuheben, damit die Räder unter dieses eingeklappt werden können, und das Fahrgestell bis auf den Boden herabgesenkt wird, um das Aufladen der zu transportierenden Maschine zu ermöglichen, anschließend wieder hochgehoben wird, um die Räder (7) in eine Transportstellung zurückzubringen, wobei die Fußplatten vom Boden entfernt sind, damit die Räder auf dem Boden stehen, wobei der Anhänger **dadurch gekennzeichnet ist, dass** die Hebemittel zwischen dem Fahrgestell (1) und jeder Fußplatte (26) zwei Arme (16 und 17) umfassen, deren untere Enden in der Fußplatte (26) geführt werden, wobei die beiden Arme miteinander in einem Zwischenpunkt angelenkt sind, der in der Mitte ihrer Länge auf einer Achse (19) liegt, wobei die oberen Enden der Arme an einer Traverse (8) des Fahrgestells geführt werden und wobei mindestens ein Hydraulikzylinder (29) zwischen die beiden Arme (16, 17) von jedem Hebemittel (10) eingesetzt ist.

2. Anhänger nach Anspruch 1, **dadurch gekennzeichnet, dass** einer der Arme (16) über einen Schwingarm (28) mit einem Punkt der Traverse (8) verbunden ist, der in der Längsachse des Fahrgestells liegt.

3. Anhänger nach Anspruch 1, **dadurch gekennzeichnet, dass** die Hebemittel (10) Einrichtungen (31, 37) aufweisen, um das Fahrgestell in einer horizontalen Lage zu halten, während es nach Aufladen der zu transportierenden Maschine hochgehoben wird.

4. Anhänger nach Anspruch 3, **dadurch gekennzeichnet, dass** die beiden Hebemittel (10) über eine Stange (30) verbunden sind, Mittel (31, 33, 37) aufweisend, wenn die Stange geneigt ist, um die Beförderung von Drucköl in den Zylinder zu steuern, der den Hebemitteln (10) zugeordnet ist mit Hebemitteln (10) versehen ist, die am wenigsten angehoben sind.

5. Anhänger nach den Ansprüchen 3 und 4, **dadurch gekennzeichnet, dass** die Stange (30) ein rohrförmiges Element (31) aufweist, in welchem ein Zapfen (32) gleitet, welcher Anschläge (33, 34) trägt, die mit dem Fahrgestell über elastische Einrichtungen (35) verbunden und dazu vorgesehen sind, bei Neigung dieses Letzteren mit einem Umschalter (37) zusammenzuarbeiten, der mit einem elektrischen Verteiler elektrisch verbunden ist, um Drucköl in den Zylinder (29) der Hebemittel (10) zu befördern, die am wenigsten angehoben sind.

6. Anhänger nach Anspruch 3, **dadurch gekennzeichnet, dass** einer der Arme (17) von einem der Hebemittel (10) und der entsprechende Arm (17) des anderen Hebemittels (10) über eine Verdrehwelle (39) starr verbunden sind, damit, wenn eines der Hebemittel (10) das Fahrgestell auf eine Höhe hochhebt, die höher als die andere ist, der Verdrehwiderstand die am höchsten angehobenen Hebemittel (10) blockiert, während das Öl auf natürliche Weise in den Zylinder strömt, der den niedrigsten Hebemitteln (10) entspricht.
